# EUROPÄISCHE PATENTSCHRIFT

(11) **EP 1 854 679 B1**
(45) Veröffentlichungstag und Bekanntmachung des Hinweises auf die Patenterteilung: **11.03.2009**
(21) Anmeldenummer: 07009471.9
(22) Anmeldetag: 11.05.2007
(51) Int. Cl.: B60R 21/203

(54) **Lenkvorrichtung mit Gassack für ein Kraftfahrzeug**
Steering system with airbag for a motor vehicle
Direction comprenant un sac gonflable pour véhicule à moteur

(30) Priorität: 12.05.2006 DE 202006007751 U
(43) Veröffentlichungstag der Anmeldung: 14.11.2007
(73) Patentinhaber: TRW Automotive Safety Systems GmbH, 63743 Aschaffenburg (DE)
(72) Erfinder: Fäth, Stefan, 63743 Aschaffenburg (DE); Frisch, Ralph, 63776 Mömbris (DE); Helmstetter, Matthias, 63743 Aschaffenburg (DE); Müller, Toralf, 51373 Leverkusen (DE)
(74) Vertreter: Prinz & Partner

(56) Entgegenhaltungen:
- EP-A- 0 615 889
- DE-A- 2 236 139
- GB-A- 1 324 401
- US-A- 3 801 123
- US-A- 5 829 780

## Beschreibung

Die Erfindung betrifft eine Lenkvorrichtung für ein Kraftfahrzeug, gemäß dem Oberbegriff des Anspruchs 1.

Es sind Rückhaltesysteme für den Fahrer eines Kraftfahrzeugs bekannt, bei denen ein Gassackmodul mit einem Gasgenerator und einem aufblasbaren Gassack unmittelbar im Lenkrad untergebracht sind. Insbesondere der Gasgenerator erfordert einen großen Bauraum, so daß der Lenkradmittelteil nicht beliebig gestaltet werden kann.

Alternativ kann der Gasgenerator in die Lenksäule integriert sein, wie z.B. in der EP-A-0 615 889 gezeigt. Aufgrund des bereits erwähnten Bauraumbedarfs des Gasgenerators muß die Lenksäule dann einen gewissen Mindestdurchmesser haben, was einen aufwendigeren Anschluß der Lenksäule an der Lenkradnabe zur Folge hat. Lösungen mit einem innerhalb der Lenksäule angeordneten mehrstufigen Gasgenerator sind schwer realisierbar.

Eine Lenkvorrichtung mit den Merkmalen des Oberbegriffs des Anspruchs 1 ist aus der US-A-5,829,780 bekannt. Ein im Lenkrad untergebrachter Airbag kann von einem Gasgenerator befüllt werden, der mittels Klammern an einem Lenksäulengehäuse des Fahrzeugs befestigt ist. Der Gasgenerator steht über einem biegsamen Schlauch mit einer Kammer in Strömungsverbindung, die die an dieser Stelle mit Öffnungen versehene hohle Lenksäule umgibt. An dem dem Gassack zugewandten offenen Ende der Lenksäule ist ein Diffusor zur Verteilung des Gases vorgesehen.

Die GB-A-1 324 401 zeigt eine Lenkvorrichtung mit einem Gasgenerator, der an dem vom Lenkrad entfernten Ende der hohlen Lenksäule angeordnet ist. Die Aufnahme, in der der Gassack im Lenkrad untergebracht ist, weist eine zwei-Wege Ventilkonstruktion mit einer schwenkbaren Ventilplatte und einer auf der Druckseite der Ventilplatte angebrachten Kunststoffklappe auf. Die Ventilplatte wird durch den Druck des vom Gasgenerator bereitgestellten Gases geöffnet, so daß Gas in den Gassack einströmen kann. Die Klappe erlaubt danach ein kontrolliertes Abströmen von Gas aus dem Gassack.

Aufgabe der Erfindung ist es, ein fahrerseitiges Rückhaltesystem bereitzustellen, das eine große Gestaltungsfreiheit bezüglich des Lenkrads und eine gezielte Steuerung des Gassackverhaltens erlaubt.

Gelöst wird diese Aufgabe durch eine Lenkvorrichtung mit den Merkmalen des Anspruchs 1. Die erfindungsgemäße Lenkvorrichtung bietet eine Reihe von Vorteilen. Die Auslagerung des Gasgenerators aus dem Lenkrad bzw. aus der Lenksäule ermöglicht eine hohe Flexibilität beim Lenkraddesign. So können kleinbauende Lenkräder ohne Einschränkung der Fahrersicherheit entwickelt werden, oder der gewonnene Bauraum kann für andere Funktionalitäten des Lenkrads genutzt werden. Ein Drehübertrager (Wickelfeder) an der Lenkradnabe für die elektrischen Zuleitungen zum Gasgenerator entfällt. Die Verlagerung der Masse des Gasgenerators einschließlich Befestigungselemente in schwingungstechnisch unkritische Bereiche verbessert auch die Resonanz-Situation des Lenkrads, so daß im besten Fall auf einen ansonsten üblichen Schwingungstilger vollständig verzichtet werden kann.

Ein weiterer Vorteil der erfindungsgemäßen Lenkvorrichtung besteht darin, daß beim Transport, bei der Lagerung sowie bei der Montage oder Demontage des Gassackmoduls (oder der einzelnen Bauteile) die Handhabung sowie die elektrische Kontaktierung des pyrotechnischen Gasgenerators entfällt. Eine Zulassung des Gassackoduls durch die Bundesanstalt für Materialprüfung (BAM-Zulassung) ist aufgrund des fehlenden Gasgenerators nicht mehr erforderlich.

Die Lenksäule, die gemäß der Erfindung als Gasleitstrecke dient, kann - ggf. durch darin vorgesehene zusätzliche Einrichtungen - dazu genutzt werden, den Druckimpuls des vom Gasgenerator freigesetzten Gases zu dämpfen, unerwünschte Partikel aus dem Gas zu filtern und das Gas vor dem Kontakt mit dem Gassack zu kühlen.

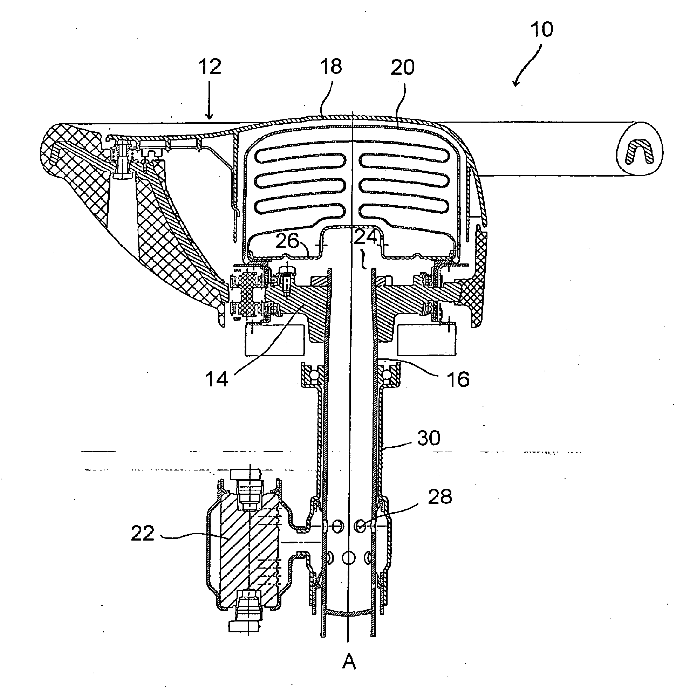

Weitere Merkmale und Vorteile ergeben sich aus den Unteransprüchen. Die Erfindung wird nachfolgend anhand einer bevorzugten Ausführungsform beschrieben, die in der Zeichnung dargestellt ist. In der Zeichnung zeigt die einzige Figur eine Schnittansicht einer erfindungsgemäßen Lenkvorrichtung.

Die in der Figur dargestellte Lenkvorrichtung 10 umfaßt ein Lenkrad 12 mit einer Nabe 14, die drehfest an einer hohlen Lenksäule 16 befestigt ist. Unterhalb einer Abdeckung 18 ist ein zusammengelegter Gassack 20 im Lenkrad 12 untergebracht.

Auf der lenkradabgewandten Seite der Nabe 14 ist außerhalb der Lenksäule 16 ein aktivierbarer Gasgenerator 22 angeordnet. Zwischen dem Gasgenerator 22 und dem Gassack 20 besteht eine Strömungsverbindung, die über eine geeignete Anbindung des Gasgenerators 22 an die Lenksäule 16 und deren lenkradseitige Öffnung 24 hergestellt ist. Zusätzlich kann ein Diffusor 26 mit Ausströmöffnungen vorgesehen sein, der die Richtung des in den Gassack 20 eintretenden Gases vorgibt. Bei der in der Figur dargestellten Ausführungsform dient der Diffusor 26 auch zur Klemmung des Gassacks 22 und damit zur Abdichtung des Raums zwischen der Nabe 14 und dem Diffusor 26.

Der Gasgenerator 22 kann entweder fest mit der Lenksäule 16 verbunden sein, so daß er bei einer Drehung der Lenksäule 16 mitverschwenkt wird; oder der Gasgenerator 22 ist fahrzeugfest, so daß eine Relativdrehung zwischen Lenksäule 16 und Gasgenerator 22 gewährleistet sein muß. Im ersten Fall (drehfeste Anbringung des Gasgenerators 22 an der Lenksäule 16) sind die elektrischen Zuleitungen des Gasgenerators 22 mit einem handelsüblichen Drehübertrager (Wickelfeder) mit der Auslöseelektronik des Rückhaltesystems verbunden. Im zweiten Fall (fahrzeugfeste Anbringung des Gasgenerators 22) ist kein Drehübertrager erforderlich. Die Strömungsverbindung für die Gasführung vom Gasgenerator 22 in die Lenksäule 16 ist in diesem Fall über dichte Kopplungskonturen (z. B. einen Flansch) bzw. ein dichtes Kopplungselement (z. B. einen biegsamen Schlauch oder ein Rohr) und radiale Lenksäulenöffnungen 28 im Bereich des Gasgenerators 22 sichergestellt. Müssen konstruktionsbedingt zwischen dem Gasgenerator 22 und der Lenksäule 16 weitere Komponenten (z. B. ein Mantelrohr 30) angeordnet sein, kann durch geeignete Maßnahmen, z. B. zusätzliche Kopplungs- und/oder Dichtungselemente, für eine dichte Gasstromführung gesorgt werden.

Wie bereits erwähnt ist die Lenksäule 16 lenkradseitig offen. Die Öffnung 24 kann aber durch einen Verschluß verschlossen sein, der sich entweder bei einem gewissen Druck passiv öffnet oder mittels einer Steuerung aktiv öffnen läßt. Die entgegengesetzte Stirnseite der Lenksäule 16 durch einen Mechanismus verschlossen, der es durch Variation eines Öffnungsquerschnitts und/oder Öffnungszeitpunktes erlaubt, das Entfaltungsverhalten und das Abströmverhalten des Gassacks 20 zu steuern (Active Vent).

In der Lenksäule 16 können geeignete Materialien eingebracht sein, um die Gasgenerator-Austrittsstoffe zu kühlen und zu filtern. Die Verbindung zwischen dem lenkradseitigen Ende der Lenksäule 16 und dem Gassack 20 ist so ausgeführt, daß kein oder nur eine geringfügige Menge des zum Aufblasen des Gassacks 20 dienenden Gases entweichen kann. Dies kann zweckmäßig mittels einer flanschartigen Verbindung oder einer Dichtung erfolgen, wobei ein ggf. präparierter Teil des Gassacks 20 als Dichtung verwendet werden kann.

Das in Richtung der Abdeckung 18 aus der Lenksäule 16 strömende Gas wird durch den Diffusor 26 oder eine andere geeignete Kontur so umgelenkt, daß der Gasstrom - bezogen auf die Lenkachse A - radial oder in einem auf das Fahrzeug individuell abgestimmten Winkel in den Gassack 20 einströmt, um bezüglich eines vorverlagerten Insassen oder eines Hindernisses ein optimales Entfaltungsverhalten zu gewährleisten. Der Diffusor 26 bzw. die Kontur bremst Partikel, die in der Lenksäule 16 beschleunigt werden, oder läßt die Partikel an seiner Oberfläche anhaften, so daß Gassackbeschädigungen durch beschleunigte Partikel vermieden werden.

## Patentansprüche

1. Lenkvorrichtung für ein Kraftfahrzeug, mit einem Lenkrad (12), in dem ein Gassack (20) untergebracht ist und das über eine Nabe (14) mit einer Lenksäule (16) verbunden ist, und mit einem auf der lenkradabgewandten Seite der Nabe (14) außerhalb der Lenksäule (16) angeordneten aktivierbaren Gasgenerator (22) zum Befüllen des Gassacks (20), wobei die Lenksäule (16) bei aktiviertem Gasgenerator (22) einen Teil einer Strömungsverbindung zwischen dem Gasgenerator (22) und dem Gassack (20) bildet, **dadurch gekennzeichnet, daß** die lenkradabgewandte Stirnseite der Lenksäule (16) durch einen Mechanismus mit variablem Öffnungsquerschnitt und/oder variablem Öffnungszeitpunkt verschlossen ist.

2. Lenkvorrichtung nach Anspruch 1, **gekennzeichnet durch** einen Diffusor (26), der das aus der Lenksäule (16) austretende Gas ablenkt.

3. Lenkvorrichtung nach einem der vorhergehenden Ansprüche, **dadurch gekennzeichnet, daß** der Gasgenerator (22) fest mit der Lenksäule (16) verbunden ist.

4. Lenkvorrichtung nach Anspruch 3, **dadurch gekennzeichnet, daß** elektrische Zuleitungen des Gasgenerators (22) mittels eines Drehübertragers mit einer Auslöseelektronik verbunden sind

5. Lenkvorrichtung nach Anspruch 1 oder 2, **dadurch gekennzeichnet, daß** der Gasgenerator (22) fahrzeugfest angebracht ist, wobei eine Relativdrehung zwischen Lenksäule (16) und Gasgenerator (22) möglich ist.

6. Lenkvorrichtung nach Anspruch 5, **dadurch gekennzeichnet, daß** für eine Strömungsverbindung zwischen dem Gasgenerator (22) und der Lenksäule (16) Kopplungskonturen, insbesondere ein Flansch, oder ein Kopplungselement, insbesondere ein Schlauch oder ein Rohr, vorgesehen sind.

7. Lenkvorrichtung nach einem der vorhergehenden Ansprüche, **dadurch gekennzeichnet, daß** die Lenksäule (16) radiale Öffnungen (28) aufweist, durch die Gas vom Gasgenerator (22) in die Lenksäule (16) eintreten kann.

8. Lenkvorrichtung nach einem der vorhergehenden Ansprüche, **dadurch gekennzeichnet, daß** die Lenksäule (16) lenkradseitig eine Öffnung (24) aufweist, durch die Gas vom Gasgenerator (22) in das Lenkradinnere eintreten kann.

9. Lenkvorrichtung nach Anspruch 8, **dadurch gekennzeichnet, daß** die Öffnung (24) durch einen Verschluß verschlossen ist, der sich bei einem gewissen Druck passiv öffnet.

10. Lenkvorrichtung nach Anspruch 8, **dadurch gekennzeichnet, daß** die Öffnung (24) durch einen Verschluß verschlossen ist, der sich über eine Steuerung aktiv öffnen läßt.

11. Lenkvorrichtung nach einem der vorhergehenden Ansprüche, **dadurch gekennzeichnet, daß** in der Lenksäule (16) eine Einrichtung zum Filtern von Partikeln vorgesehen ist.

12. Lenkvorrichtung nach einem der vorhergehenden Ansprüche, **dadurch gekennzeichnet, daß** in der Lenksäule (16) eine Einrichtung zum Kühlen des Gases vom Gasgenerator (22) und/oder von Partikeln vorgesehen ist.

## Claims

1. A steering device for a motor vehicle, the steering device comprising a steering wheel (12) in which a gas bag (20) is accommodated and which is connected with a steering column (16) via a hub (14), and a gas generator (22) which is able to be activated to fill the gas bag (20) and which is arranged on the side of the hub (14) facing away from the steering wheel outside the steering column (16), the steering column (16) forming a part of a flow connection between the gas generator (22) and the gas bag (20) when the gas generator (22) is activated, **characterized in that** the end side of the steering column (16) facing away from the steering wheel is closed by a mechanism with a variable opening cross-section and/or with a variable moment of opening.

2. The steering device according to Claim 1, **characterized by** a diffuser (26) which deflects gas emerging from the steering column (16).

3. The steering device according to any of the preceding claims, **characterized in that** the gas generator (22) is securely connected with the steering column (16).

4. The steering device according to Claim 3, **characterized in that** electric leads of the gas generator (22) are connected with an electronic activation unit by a rotary joint.

5. The steering device according to Claim 1 or 2, **characterized in that** the gas generator (22) is arranged so as to be fixed to the vehicle, a relative rotation being possible between the steering column (16) and the gas generator (22).

6. The steering device according to Claim 5, **characterized in that** coupling contours, in particular a flange, or a coupling element, in particular a pipe or a tube, are provided for a flow connection between the gas generator (22) and the steering column (16).

7. The steering device according to any of the preceding claims, **characterized in that** the steering column (16) has radial openings (28) through which gas from the gas generator (22) can enter the steering column (16).

8. The steering device according to any of the preceding claims, **characterized in that** the steering column (16) has an opening (24) on a side facing the steering wheel, through which gas from the gas generator (22) can enter the interior of the steering wheel.

9. The steering device according to Claim 8, **characterized in that** the opening (24) is closed by a closure which opens passively at a certain pressure.

10. The steering device according to Claim 8, **characterized in that** the opening (24) is closed by a closure which can be opened actively by a control arrangement.

11. The steering device according to any of the preceding claims, **characterized in that** an arrangement for filtering particles is provided in the steering column (16).

12. The steering device according to any of the preceding claims, **characterized in that** an arrangement for cooling gas from the gas generator (22) and/or from particles is provided in the steering column (16).

## Revendications

1. Dispositif de direction pour un véhicule automobile, comportant un volant de direction (12) dans lequel est logé un coussin à gaz (20) et qui est relié par un moyeu (14) à une colonne de direction (16) et comportant un générateur de gaz (22) agencé à l'extérieur de la colonne de direction (16) sur la face du moyeu (14), qui est détournée du volant de direction, et activable pour remplir le coussin à gaz (20), la colonne de direction (16) formant, lorsque le générateur de gaz (22) est activé, une partie d'une liaison par écoulement entre le générateur de gaz (22) et le coussin à gaz (20), **caractérisé en ce que** la face frontale de la colonne de direction (16), qui est détournée du volant de direction, est fermée par un mécanisme à section transversale d'ouverture variable et/ou à moment d'ouverture variable.

2. Dispositif de direction selon la revendication 1, **caractérisé par** un diffuseur (26) qui dévie le gaz sortant hors de la colonne de direction (16).

3. Dispositif de direction selon l'une des revendications précédentes, **caractérisé en ce que** le générateur de gaz (22) est relié de manière solidaire avec la colonne de direction (16).

4. Dispositif de direction selon la revendication 3, **caractérisé en ce que** des lignes d'amenée électriques du générateur de gaz (22) sont reliées à un système électronique de déclenchement au moyen d'un transmetteur rotatif.

5. Dispositif de direction selon la revendication 1 ou 2, **caractérisé en ce que** le générateur de gaz (22) est monté solidaire du véhicule, un mouvement relatif étant possible entre la colonne de direction (16) et le générateur de gaz (22).

6. Dispositif de direction selon la revendication 5, **caractérisé en ce que** pour une liaison par écoulement entre le générateur de gaz (22) et la colonne de direction (16) sont prévus des contours d'accouplement, en particulier une bride, ou un élément d'accouplement, en particulier un tuyau ou un tube.

7. Dispositif de direction selon l'une des revendications précédentes, **caractérisé en ce que** la colonne de direction (16) présente des ouvertures radiales (28) à travers lesquelles du gaz provenant du générateur de gaz (22) peut pénétrer dans la colonne de direction (16).

8. Dispositif de direction selon l'une des revendications précédentes, **caractérisé en ce que** la colonne de direction (16) présente côté volant de direction une ouverture (24) à travers laquelle du gaz provenant du générateur de gaz (22) peut pénétrer à l'intérieur du volant de direction.

9. Dispositif de direction selon la revendication 8, **caractérisé en ce que** l'ouverture (24) est fermée par une fermeture qui s'ouvre passivement à une certaine pression.

10. Dispositif de direction selon la revendication 8, **caractérisé en ce que** l'ouverture (24) est fermée par une fermeture qui peut être ouverte activement par l'intermédiaire d'une commande.

11. Dispositif de direction selon l'une des revendications précédentes, **caractérisé en ce que** dans la colonne de direction (16) est prévu un système de filtrage de particules.

12. Dispositif de direction selon l'une des revendications précédentes, **caractérisé en ce que** dans la colonne de direction (16) est prévu un système de refroidissement du gaz provenant du générateur de gaz (22) et/ou de particules.
